# EUROPEAN PATENT APPLICATION

(11) **EP 4 434 807 A1**
(43) Date of publication of application: **25.09.2024**
(21) Application number: 22932884.4
(22) Date of filing: 02.06.2022
(51) Int. Cl.: B60N 2/22, B60N 2/42

(54) **RESTORATION AND ENERGY ABSORPTION MECHANISM FOR SEAT BACKREST AND AUTOMOBILE SEAT**

(30) Priority: 21.03.2022 CN 202220610137 U
(71) Applicant: Yanfeng International Automotive Technology Co., Ltd., Shanghai 201306 (CN)
(72) Inventor: WANG, Longmei, Shanghai 201306 (CN); WANG, Zhenhua, Shanghai 201306 (CN); CHEN, Xu, Shanghai 201306 (CN); TANG, Xun, Shanghai 201306 (CN)
(74) Representative: Specht, Peter
(86) International application number: PCT/CN2022/096766
(87) International publication number: WO 2023/178831

(57) **Abstract**

A restoration and energy absorption mechanism for a seat backrest comprises a seat-frame arm plate (100) and an angle-adjuster lower connection plate (300), wherein a seat backrest is mounted to the angle-adjuster lower connection plate through an angle adjuster (400) by which an inclination of the seat backrest is adjustable, wherein a first site (310) of the angle-adjuster lower connection plate is hinged to a first site (110) of the seat-frame arm plate through a pin, wherein a second site (320) of the angle-adjuster lower connection plate is provided with a waist-shaped hole (340), wherein an energy-absorbing fastening element (620) passes through a first site of the waist-shaped hole and through a locking piece (500) and is fastened to a second site (120) of the seat-frame arm plate, wherein the locking piece can be destructively unlocked by means of an instantaneous external force, so that a relative positioning between the backrest and the seat cushion is relieved, and hence the seat can be restored in a collision process, wherein energy absorption is achieved through squeeze and deformation of materials during the restoration. The restoration and energy absorption mechanism has a simple structure and low costs, and can ensure a static strength of the backrest. The present invention also relates to an automobile seat comprising the restoration and energy absorption mechanism.

## Description

### TECHNICAL FIELD

The present invention relates to the field of automobile seats. In particular, the present invention relates to a restoration and energy absorption mechanism for a seat backrest, and an automobile seat.

### BACKGROUND OF INVENTION

In an event of a vehicle collision, especially a front collision, a force applied to an automobile seat may, for example, cause that a passenger's chest is strongly pressed against a seat belt. Especially when a backrest is in a large-angle backward inclined state (such as in a zero-gravity state), a risk of injury in a collision event is much higher, in comparison with when the backrest is in a small-angle backward inclined state. Therefore, restoration to the small-angle backward inclined state is necessary for better protection to the passenger in the collision event, wherein the risk of injury is reduced.

For this purpose, an inclination adjustment system for a vehicle seat in a collision event is known. The inclination adjustment system for a vehicle seat allows an angle adjustment of a backrest in the collision event. The inclination adjustment system for a seat typically includes a collision detection sensor, and an active mechanical system for adjusting a seat angle when a collision is detected.

However, such inclination adjustment system is typically a complicated system added to an automobile seat, which increases a size of the automobile seat and makes the automobile seat heavier. Furthermore, such inclination adjustment system is affected by the efficiency of collision detection and the efficiency of the active mechanical system.

The Chinese patent application publication CN113459910A has disclosed a reactive and dissipative inclination adjustment system for a vehicle seat, which comprises: a seat cushion; a backrest; a hinge including a first flange fixed to the seat cushion and a second flange fixed to the backrest, wherein the second flange is rotatable relative to the first flange; a device for returning the backrest to its upright position, which rotates together with the second flange and defines a straightening groove, wherein the straightening groove has a first portion separated from a second portion by a bridge portion; a pin formed integrally with the backrest and extending into the first portion of the straightening groove, wherein the pin breaks the bridge portion and then moves freely in the second portion, when a collision torque greater than a predetermined torque is applied to the backrest.

In the prior art, the restoration of the backrest is achieved by relieving a connection between the backrest and an angle adjuster. In a normal state, the backrest is locked by cooperation of a shaft with a thin material which will be broken after collision. The connection between the backrest and the angle adjuster is relieved by breakage of the thin material during collision. This inclination adjustment system in the prior art has the defects of a complex structure, a large number of parts and high costs.

### SUMMARY OF INVENTION

Directed to at least one of defects in the prior art, an object of the present invention is to provide a restoration and energy absorption mechanism for a seat backrest, which has a simple structure and low costs and can ensure a static strength of the seat backrest.

Another object of the present invention is to provide an automobile seat including the restoration and energy absorption mechanism for a seat backrest.

In order to achieve the above object of the present invention, the restoration and energy absorption mechanism for a seat backrest according to the present invention comprises a seat-frame arm plate, and an angle-adjuster lower connection plate, to which a seat backrest is mounted through an angle adjuster, wherein an inclination of the backrest is adjustable through the angle adjuster, wherein a first site of the angle-adjuster lower connection plate is hinged to a first site of the seat-frame arm plate through a pin, characterized in that the restoration and energy absorption mechanism further comprises:
- a waist-shaped hole, which is provided at a second site of the angle-adjuster lower connection plate, and in which an energy-absorbing structure is arranged,
- an energy-absorbing fastening element, which passes through a first site of the waist-shaped hole and is fastened to a second site of the seat-frame arm plate, and
- a locking piece, preferably wherein the locking piece is arranged at the first site of the waist-shaped hole in a rigid connection manner, wherein in a locking state of the locking piece, the locking piece locks the angle-adjuster lower connection plate with the seat-frame arm plate, and in an unlocking state of the locking piece, the angle-adjuster lower connection plate is unlocked from the seat-frame arm plate, so that the seat-frame arm plate and the angle-adjuster lower connection plate are rotatable relatively, wherein the energy-absorbing fastening element moves from the first site of the waist-shaped hole to a second site of the waist-shaped hole, wherein the energy-absorbing fastening element cooperates with the energy-absorbing structure for energy absorption.

In the case of the restoration and energy absorption mechanism according to the present invention, the locking piece can be destructively released by an instantaneous external force, and then the kinetic energy can be absorbed by means of the energy-absorbing structure.

In a preferred embodiment of the present invention, the locking piece cooperates with the energy-absorbing fastening element to lock the angle-adjuster lower connection plate with the seat-frame arm plate at the first site of the waist-shaped hole.

In a preferred embodiment of the present invention, the first site and the second site of the waist-shaped hole are two opposite sites of the waist-shaped hole.

In a preferred embodiment of the present invention, the first site of the waist-shaped hole is arranged above the second site of the waist-shaped hole.

In a preferred embodiment of the present invention, the first site of the waist-shaped hole has an inner diameter B greater than an inner diameter A of the second site of the waist-shaped hole. The energy-absorbing fastening element has a diameter D which satisfies the relationship: B>D>A. As the energy-absorbing structure, the second site of the waist-shaped hole, which is narrower than the first site, can be squeezed and deformed by an energy transmission element.

In a preferred embodiment of the present invention, the waist-shaped hole may have a constant inner diameter, and the second site of the waist-shaped hole has a plurality of teeth, which are squeezable and deformable or removable under a load over a corresponding predetermined load threshold.

In a preferred embodiment of the present invention, the locking piece includes a locking-piece fixing part and a locking-piece fastening part, wherein the locking-piece fixing part is arranged at an outer periphery of the central locking-piece fastening part, wherein the locking-piece fixing part is connected with the locking-piece fastening part through a rated breaking point, wherein the locking piece is fixed to the angle-adjuster lower connection plate by welding the locking-piece fixing part thereto, wherein the locking-piece fastening part is penetrated by the energy-absorbing fastening element.

In a preferred embodiment of the present invention, the energy-absorbing structure is arranged at the second site of the waist-shaped hole, wherein during a movement of the energy-absorbing fastening element from the first site of the waist-shaped hole to an area where the energy-absorbing structure is arranged, the energy generated during a rotation of the seat backrest is absorbed by tearing or squeezing the energy-absorbing structure.

In a preferred embodiment of the present invention, the energy-absorbing structure is a tearable energy-absorbing structure, which separates the second site of the waist-shaped hole, and/or the energy-absorbing structure is a squeezable energy-absorbing structure, which has an inner diameter smaller than an inner diameter of the first site of the waist-shaped hole.

In a preferred embodiment of the present invention, in the angle-adjuster lower connection plate, the first site of the angle-adjuster lower connection plate is arranged in front of the second site of the angle-adjuster lower connection plate; and in the seat-frame arm plate, the first site of the seat-frame arm plate is arranged in front of the second site of the seat-frame arm plate.

In a preferred embodiment of the present invention, a through hole is provided at the first site of the angle-adjuster lower connection plate, and a first nut is fixed, especially welded at the first site of the seat-frame arm plate, wherein the pin is a screw bolt, which passes through the through hole in the angle-adjuster lower connection plate and is screwed into the first nut, so that the first site of the angle-adjuster lower connection plate is hinged to the first site of the seat-frame arm plate.

In a preferred embodiment of the present invention, a second nut is fixed, especially welded at the second site of the seat-frame arm plate, wherein the energy-absorbing fastening element is an energy-absorbing screw bolt, which passes through the first site of the waist-shaped hole and through the locking piece and is screwed into the second nut, so that the energy-absorbing screw bolt is fastened at the second site of the seat-frame arm plate.

In a preferred embodiment of the present invention, the locking piece includes a locking-piece fixing part and a locking-piece fastening part, wherein the locking-piece fixing part is arranged at an outer periphery of the central locking-piece fastening part, wherein the locking-piece fixing part is connected with the locking-piece fastening part through a rated breaking point such as a strip structure, wherein the locking-piece fastening part is coaxial with the energy-absorbing fastening element, wherein the energy-absorbing fastening element passes through the first site of the waist-shaped hole from outside and through the locking-piece fastening part and then is screwed into the second nut. The energy-absorbing fastening element may be a stepped screw bolt or the like fastener. When the locking-piece fixing part is kept in connection with the locking-piece fastening part, the angle-adjuster lower connection plate is locked with the seat-frame arm plate by the energy-absorbing fastening element. When the locking-piece fixing part and the locking-piece fastening part are disconnected, the angle-adjuster lower connection plate is unlocked from the seat-frame arm plate, so that the seat-frame arm plate and the angle-adjuster lower connection plate is rotatable relatively.

Another aspect of the invention relates to a restoration and energy absorption mechanism for a seat backrest, which comprises a seat-frame arm plate, and an angle-adjuster lower connection plate, to which a seat backrest is mounted through an angle adjuster, wherein an inclination of the seat backrest is adjustable through the angle adjuster, wherein a first site of the angle-adjuster lower connection plate is hinged to a first site of the seat-frame arm plate through a pin, characterized in that the restoration and energy absorption mechanism further comprises:
- a waist-shaped hole, in which an energy-absorbing structure is provided, and which is provided for one of the angle-adjuster lower connection plate and the seat-frame arm plate,
- an energy-absorbing fastening element, which is provided for the other of the angle-adjuster lower connection plate and the seat-frame arm plate, and which passes through a first site of the waist-shaped hole and is fastened to the other member, and
- a locking piece, wherein in a locking state of the locking piece, the locking piece locks the angle-adjuster lower connection plate with the seat-frame arm plate, and in an unlocking state of the locking piece, the angle-adjuster lower connection plate is unlocked from the seat-frame arm plate, so that the seat-frame arm plate and the angle-adjuster lower connection plate is rotatable relatively, wherein during a movement of the energy-absorbing fastening element from the first site of the waist-shaped hole to a second site of the waist-shaped hole, the energy-absorbing fastening element cooperates with the energy-absorbing structure for energy absorption.

An automobile seat according to the present invention includes the restoration and energy absorption mechanism for a seat backrest according to any one of the above embodiments.

Due to the adoption of the above technical solutions, the locking piece in the present invention can be destructively unlocked by means of an instantaneous external force, so that a relative positioning between the seat backrest and the seat cushion is relieved, so that energy absorption is enabled through squeeze and deformation of the material in a collision process. The restoration and energy absorption mechanism and thus the automobile seat have a simple structure and low costs, and can ensure a static strength of the backrest.

### BRIEF DESCRIPTION OF DRAWINGS

In order to explain the technical solutions in the embodiments of the present invention or in the prior art more clearly, drawings for illustrating these embodiments or the prior art are briefly introduced as below.
FIG. 1 is an exploded schematic view of a restoration and energy absorption mechanism for a seat backrest according to the present invention.
FIG. 2 is a schematic front view of a seat-frame arm plate and an angle-adjuster lower connection plate according to the present invention.
FIG. 3 is a schematic back view of the seat-frame arm plate and the angle-adjuster lower connection plate according to the present invention.
FIG. 4 is a schematic view showing the assembly of a locking piece with the angle-adjuster lower connection plate according to the present invention.
FIG. 5 is a schematic view showing a position and a size of the angle-adjuster lower connection plate and an energy-absorbing fastening element according to the present invention.
FIG. 6 is a structural schematic view of an angle-adjuster lower connection plate according to another embodiment of the present invention.
FIG. 7 is a schematic view showing an automobile seat with the locking piece in a locking state according to the present invention.
FIG. 8 is a partial enlarged view of the angle-adjuster lower connection plate when the locking piece is in the locking state according to the present invention.
FIG. 9 is a schematic view showing the automobile seat when the locking piece is in an unlocking state according to the present invention.
FIG. 10 is a partial enlarged view of the angle-adjuster lower connection plate when the locking piece is in the unlocking state.

### Embodiments

In the description of the present invention, it should be noted that the azimuth or positional relationship indicated by the terms "up", "down", "left", "right", "inside", "outside" and the like are based on the attached drawings, wherein "longitudinal (X direction)","lateral (Y direction)" and "vertical (Z direction)" are terms for a space coordinate system in the automobile field, which are professional terms well-known to those skilled in the art. These terms are just for the convenience of describing the present invention and simplifying the description, and do not indicate or imply that the indicated devices or elements must have a specific orientation, or must be constructed and operated in a specific orientation, and do not restrict the protection scope of the present invention.

Detailed structures of the present invention are further described with reference to the attached drawings and specific embodiments.

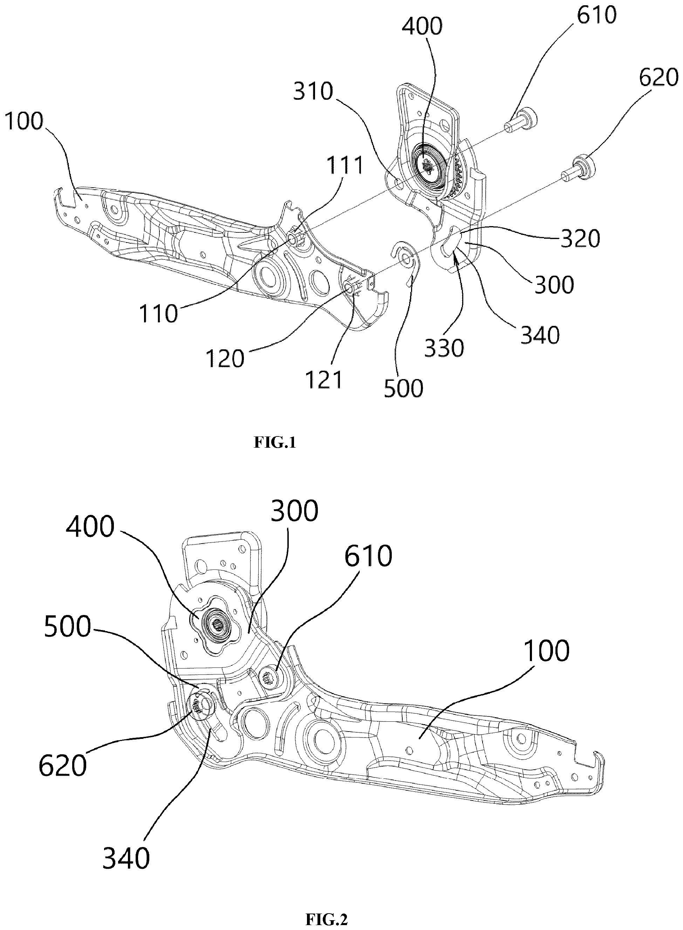

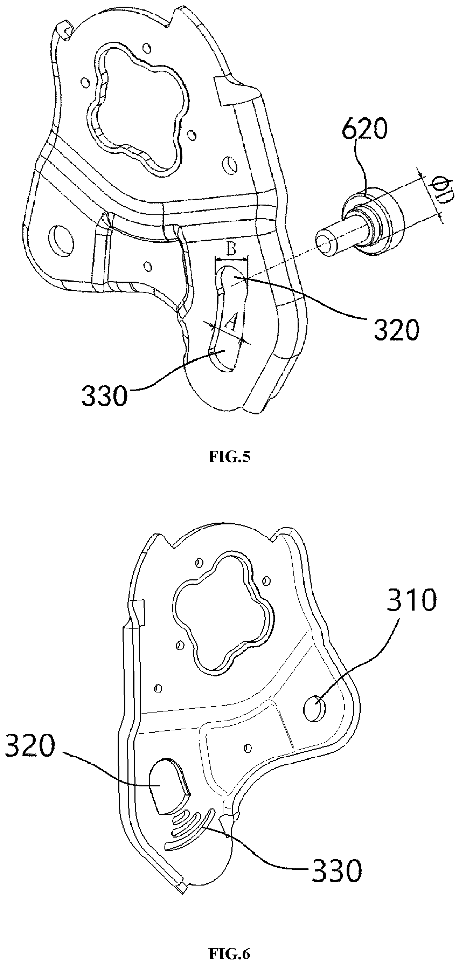

Referring to FIGS. 1 to 3, a restoration and energy absorption mechanism for a seat backrest and a seat comprising the same are shown. The restoration and energy absorption mechanism mainly comprises: a seat-frame arm plate 100; an angle adjuster 400 with an angle-adjuster lower connection plate 300 for connecting a backrest frame 200 (see FIG. 6) with the seat-frame arm plate 100; and a locking piece 500 arranged between the seat-frame arm plate 100 and the angle-adjuster lower connection plate 300; wherein a waist-shaped hole 340 is provided in the angle-adjuster lower connection plate 300, wherein the waist-shaped hole 340 cooperates with the locking piece 500 for a restoration and energy absorption function according to the present invention. The backrest frame 200 may be connected with the angle adjuster through an angle-adjuster upper connection plate.

The angle-adjuster lower connection plate 300 has a first site 310 of the angle-adjuster lower connection plate (a first area of the angle-adjuster lower connection plate) and a second site 320 of the angle-adjuster lower connection plate (a second area of the angle-adjuster lower connection plate). The first site 310 of the angle-adjuster lower connection plate is in front of the second site 320 of the angle-adjuster lower connection plate. The seat-frame arm plate 100 has a first site 110 of the seat-frame arm plate (a first area of the seat-frame arm plate) and a second site 120 of the seat-frame arm plate (a second area of the seat-frame arm plate). The first site 110 of the seat-frame arm plate is in front of the second site 120 of the seat-frame arm plate. The waist-shaped hole 340 has a first site 320 of the waist-shaped hole (a first area of the waist-shaped hole) and a second site 330 of the waist-shaped hole (a second area of the waist-shaped hole), wherein the first site 320 of the waist-shaped hole is arranged above the second site 330 of the waist-shaped hole.

Both the first site 110 of the seat-frame arm plate and the second site 120 of the seat-frame arm plate are provided with a through hole for receiving a fastener. A first nut 111 is welded on an inner side of the first site 110 of the seat-frame arm plate, and a second nut 121 is welded on an inner side of the second site 120 of the seat-frame arm plate.

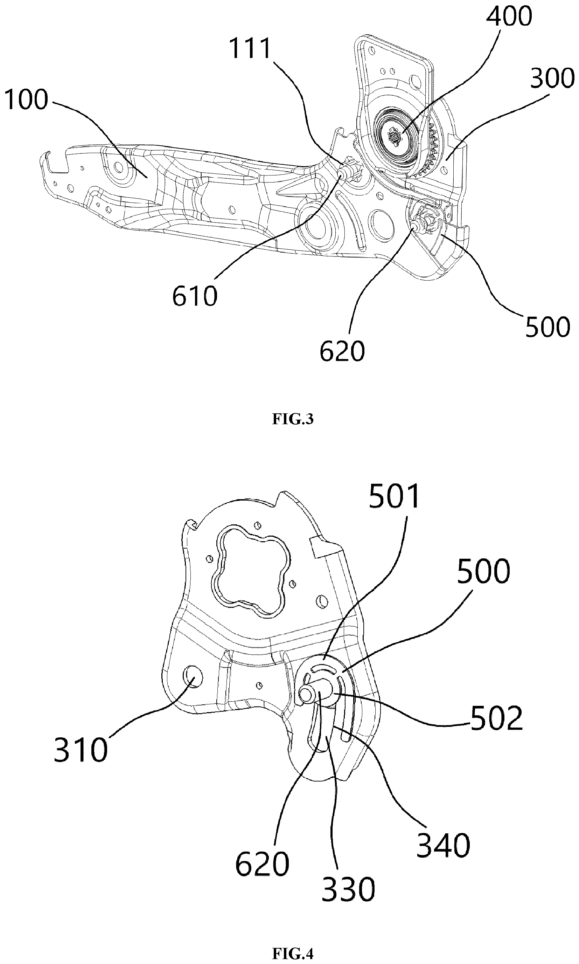

Referring to FIGS. 3 and 4, a screw bolt 610 passes through the first site 310 of the angle-adjuster lower connection plate and the first site 110 of the seat-frame arm plate from outside and is fastened to the seat-frame arm plate 100 by the first nut 111. The locking piece 500 is arranged on an inner side of the angle-adjuster lower connection plate 300. The locking piece 500 includes a locking-piece fixing part 501 and a locking-piece fastening part 502, wherein the locking-piece fastening part 502 is arranged at the central position and the locking-piece fixing part 501 is arranged at an outer periphery of the locking-piece fastening part 502. The locking-piece fixing part 501 and the locking-piece fastening part 502 may be connected with each other through a rated breaking point. The locking-piece fastening part 502 and an energy-absorbing fastening element 620 are coaxially arranged at the first site 320 of the waist-shaped hole, wherein the energy-absorbing fastening element 620 sequentially passes through the first site 320 of the waist-shaped hole and the locking-piece fastening part 502 from outside and is fastened to the seat-frame arm plate 100 by the second nut 121. The energy-absorbing fastening element 620 may be a stepped screw bolt or the like fastener. The locking piece 500 is fixed to the inner side of the angle-adjuster lower connection plate by welding the locking-piece fixing part 501 beside the waist-shaped hole 340, wherein the locking-piece fixing part 501 is connected with the locking-piece fastening part 502 through a strip structure. In the above-mentioned arrangement, by the two-point fixation through the energy-absorbing fastening element 620 and the screw bolt 610, the rotation freedom of the angle-adjuster lower connection plate 300 about the Y-axis is fixed, and thus a rotational movement of the angle-adjuster lower connection plate 300 about the screw bolt 610 is prevented, and hence the angle-adjuster lower connection plate 300 is fixed to the seat-frame arm plate 100.

In the shown embodiment, the energy-absorbing fastening element may be any suitable fastener that can be fastened to the seat-frame arm plate. For example, the energy-absorbing fastening element may be a pin or another finger element welded on the seat-frame arm plate. The energy-absorbing fastening element may also be a screw bolt.

The waist-shaped hole 340 is a shaped hole with two inner diameters of different sizes. The first site 320 of the waist-shaped hole has an inner diameter B, the second site 330 of the waist-shaped hole has an inner diameter A, and the energy-absorbing fastening element 620 has an outer diameter D, wherein B ≥ D > A. Accordingly, the energy-absorbing fastening element 620 can pass through the first site 320 of the waist-shaped hole. When the energy-absorbing fastening element 620 moves from the first site 320 of the waist-shaped hole to the second site 330 of the waist-shaped hole along the waist-shaped hole 340, the energy-absorbing fastening element 620 can squeeze and deform hole walls, and thus the energy absorption is achieved.

Referring to FIG. 6, the energy-absorbing structure at the second site 330 of the waist-shaped hole may be tearable or cuttable. In this embodiment, the waist-shaped hole may be understood in such manner that in an initial state the angle-adjuster lower connection plate 300 includes the first site of the waist-shaped hole, and optionally may also include a portion of the second site of the waist-shaped hole; and the angle-adjuster lower connection plate 300 is configured such that a final waist-shaped hole is formed in the angle-adjuster lower connection plate 300 by a movement of the energy-absorbing fastening element 620 in a collision event, wherein energy absorption is achieved. In this embodiment, the final waist-shaped hole may have the same or similar shape as the waist-shaped hole in the previous embodiment after deformation.

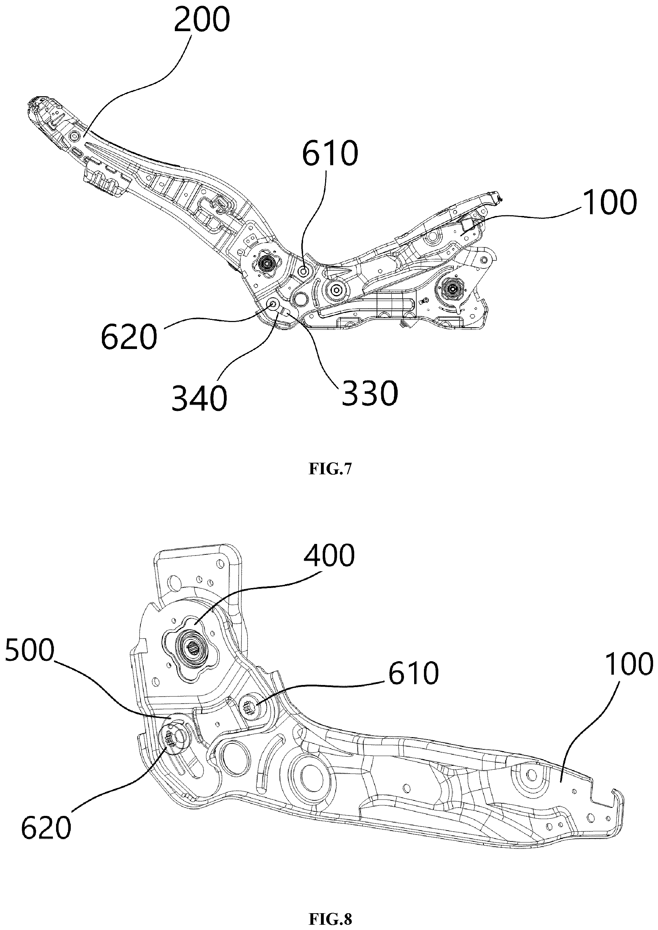

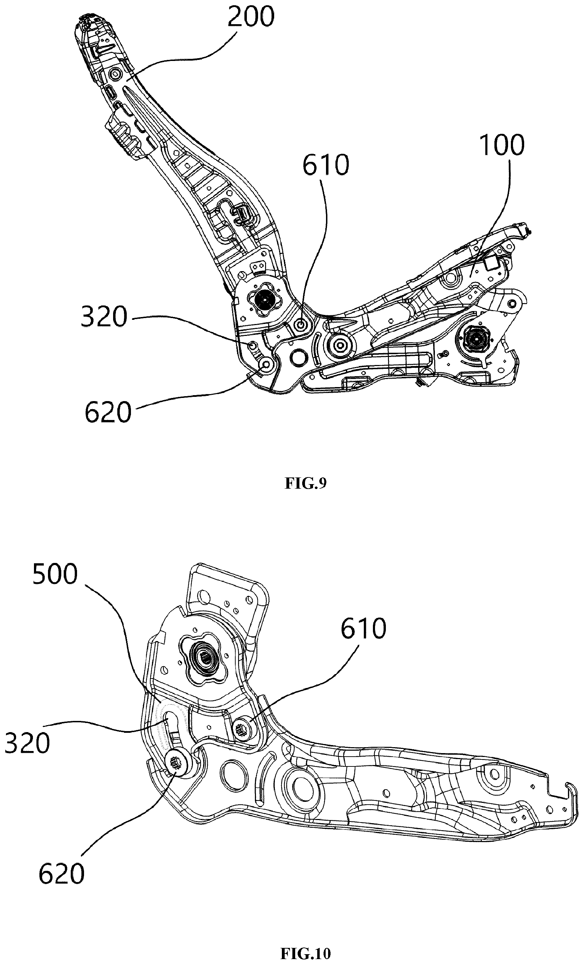

Referring to FIGS. 7 to 10, at the moment of collision, the backrest frame 200 still keeps moving forward, and the locking piece 500 is loaded, and thus the locking-piece fixing part 501 is disconnected with the locking-piece fastening part 502, and thus the fixing point achieved by means of the energy-absorbing fastening element 620 between the angle-adjuster lower connection plate 300 and the seat-frame arm plate 100 is relieved. The angle-adjuster lower connection plate 300 rotates forward about the screw bolt 610, the energy-absorbing fastening element 620 moves from the first site 320 of the waist-shaped hole towards the second site 330 of the waist-shaped hole along the waist-shaped hole 340, and thus the backrest frame 200 is quickly restored. When the energy-absorbing fastening element 620 enters the second site 330 of the waist-shaped hole, the energy-absorbing fastening element 620 squeezes the angle-adjuster lower connection plate 300 at the second site, so that the angle-adjuster lower connection plate 300 is deformed and thus the energy generated by the collision is absorbed, wherein the energy transmission via the backrest frame 200 to the passenger is prevented as far as possible, and meanwhile, the final relative position of the angle-adjuster lower connection plate 300 and the backrest frame 200 relative to the seat-frame arm plate 100 is fixed by destructive squeeze between the materials.

In an embodiment not shown, an inverse arrangement of the energy-absorbing fastening element and the waist-shaped hole is also possible, wherein the energy-absorbing fastening element is arranged on the angle-adjuster lower connection plate, and the waist-shaped hole is arranged in the seat-frame arm plate.

It should be noted, the terms in the specification are only for the purpose of describing specific aspects, and are not used to limit the disclosure. The singular forms "a" and "the" shall include the plural forms, unless otherwise clearly indicated. It can be understood that the terms "including" and "comprising" and the like, when used in the application document, specify the existence of stated operations, elements and/or components, but do not exclude the existence or addition of one or more other operations, elements, components and/or their combinations. The term "and/or" includes all arbitrary combinations of one or more related listed items. In the description of the drawings, the same reference numerals always indicate the same elements.

The thickness of elements in the drawings may be exaggerated for clarity. In addition, it would be appreciated that if an element is referred to be on, coupled with or connected with another element, it can be directly formed on, coupled with or connected with said another element, or there may be one or more intervening elements therebetween. On the contrary, if the expressions "directly on...", "directly coupled with..." and "directly connected with ..." are used here, they means that there are no intervening elements. Other wordings, such as "between..." and "directly between...", "attached" and "directly attached", "adjacent" and "directly adjacent" and so on, which are used to describe the relationship between elements should be interpreted in a similar way.

Terms such as "top", "bottom", "above", "below", "upper" and "lower" are used here to describe the relationship of one element, layer or region with respect to another element, layer or region as shown in the drawings. It would be appreciated that these terms should also include other orientations of the device besides those shown in the drawings.

It can be understood that although the terms "first", "second" and so on may be used herein to describe different elements, these elements shall not be limited by these terms. These terms are only used to distinguish one element from another element. Therefore, a first element may be referred to as a second element without departing from the teaching of the present inventive concept.

It's understood that all the exemplary embodiments disclosed herein can be arbitrarily combined with each other.

Finally, it should be pointed out, the above-mentioned embodiments are only for understanding the present invention, and are not to limit the protection scope of the present invention. For those skilled in the art, modifications can be made on the basis of these embodiments, and these modifications do not depart from the protection scope of the present invention.

## Claims

1. A restoration and energy absorption mechanism for a seat backrest, comprising a seat-frame arm plate, and an angle-adjuster lower connection plate, to which a seat backrest is mounted through an angle adjuster, wherein an inclination of the seat backrest is adjustable by means of the angle adjuster, wherein a first site of the angle-adjuster lower connection plate is hinged to a first site of the seat-frame arm plate through a pin, **characterized in that** the restoration and energy absorption mechanism further comprises:
- a waist-shaped hole, which is provided at a second site of the angle-adjuster lower connection plate, and in which an energy-absorbing structure is arranged,
- an energy-absorbing fastening element, which passes through a first site of the waist-shaped hole and is fastened to a second site of the seat-frame arm plate, and
- a locking piece, which locks the angle-adjuster lower connection plate with the seat-frame arm plate in a locking state of the locking piece, wherein the angle-adjuster lower connection plate is unlocked from the seat-frame arm plate in an unlocking state of the locking piece, so that the seat-frame arm plate and the angle-adjuster lower connection plate are rotatable relatively, wherein the energy-absorbing fastening element moves from the first site of the waist-shaped hole to a second site of the waist-shaped hole, wherein the energy-absorbing fastening element cooperates with the energy-absorbing structure for energy absorption.

2. The restoration and energy absorption mechanism for a seat backrest according to claim 1, **characterized in that** the locking piece is arranged at the first site of the waist-shaped hole in a rigid connection manner.

3. The restoration and energy absorption mechanism for a seat backrest according to claim 1 or 2, **characterized in that** the locking piece cooperates with the energy-absorbing fastening element to lock the angle-adjuster lower connection plate with the seat-frame arm plate at the first site of the waist-shaped hole.

4. The restoration and energy absorption mechanism for a seat backrest according to claim 1 or 2, **characterized in that** the locking piece comprises a locking-piece fixing part and a locking-piece fastening part, wherein the locking-piece fixing part is arranged at an outer periphery of the central locking-piece fastening part, wherein the locking-piece fixing part is connected with the locking-piece fastening part through a rated breaking point, wherein the locking piece is fixed to the angle-adjuster lower connection plate by welding the locking-piece fixing part thereto, wherein the locking-piece fastening part is penetrated by the energy-absorbing fastening element.

5. The restoration and energy absorption mechanism for a seat backrest according to claim 1 or 2, **characterized in that** the first site of the waist-shaped hole is arranged above the second site of the waist-shaped hole.

6. The restoration and energy absorption mechanism for a seat backrest according to claim 1 or 2, **characterized in that** the first site of the waist-shaped hole has an inner diameter B greater than an inner diameter A of the second site of the waist-shaped hole, wherein the energy-absorbing fastening element has a diameter D, which satisfies the relationship: B≥ D > A, wherein as the energy-absorbing structure, the second site of the waist-shaped hole, which is narrower than the first site of the waist-shaped hole, is squeezable and deformable by the energy transmission element.

7. The restoration and energy absorption mechanism for a seat backrest according to claim 1 or 2, **characterized in that** the energy-absorbing structure is arranged at the second site of the waist-shaped hole, wherein during a movement of the energy-absorbing fastening element from the first site of the waist-shaped hole to a position where the energy-absorbing structure is arranged, the energy generated during a rotation of the seat backrest is absorbed by tearing or squeezing the energy-absorbing structure.

8. The restoration and energy absorption mechanism for a seat backrest according to claim 7, **characterized in that**
- the energy-absorbing structure is a tearable energy-absorbing structure, which separates the second site of the waist-shaped hole; or
- the energy-absorbing structure is a squeezable energy-absorbing structure, which has an inner diameter smaller than an inner diameter of the first site of the waist-shaped hole.

9. The restoration and energy absorption mechanism for a seat backrest according to claim 1 or 2, **characterized in that** the first site of the angle-adjuster lower connection plate is arranged in front of the second site of the angle-adjuster lower connection plate, and the first site of the seat-frame arm plate is arranged in front of the second site of the seat-frame arm plate.

10. The restoration and energy absorption mechanism for a seat backrest according to claim 1 or 2, **characterized in that** a through hole is provided at the first site of the angle-adjuster lower connection plate , a first nut is welded at the first site of the seat-frame arm plate, and the pin is a screw bolt, which passes through the through hole in the angle-adjuster lower connection plate and is screwed into the first nut, so that the first site of the angle-adjuster lower connection plate is hinged to the first site of the seat-frame arm plate.

11. The restoration and energy absorption mechanism for a seat backrest according to claim 1 or 2, **characterized in that** a second nut is welded at the second site of the seat-frame arm plate, and the energy-absorbing fastening element is an energy-absorbing screw bolt, which passes through the first site of the waist-shaped hole and through the locking piece and is screwed into the second nut, so that the energy-absorbing screw bolt is fastened to the second site of the seat-frame arm plate.

12. The restoration and energy absorption mechanism for a seat backrest according to claim 11, **characterized in that** the locking piece comprises a locking-piece fixing part and a locking-piece fastening part, wherein the locking-piece fixing part is arranged at an outer periphery of the central locking-piece fastening part, wherein the locking-piece fixing part is connected with the locking-piece fastening part through a rated breaking point, wherein the locking-piece fastening part is coaxial with the energy-absorbing fastening element, wherein the energy-absorbing fastening element passes through the first site of the waist-shaped hole from outside, through the locking-piece fastening part and then is screwed into the second nut, wherein, when the locking-piece fixing part is kept in connection with the locking-piece fastening part, the angle-adjuster lower connection plate is locked with the seat-frame arm plate by the energy-absorbing fastening element, and when the locking-piece fixing part is disconnected with the locking-piece fastening part, the angle-adjuster lower connection plate is unlocked from the seat-frame arm plate, so that the seat-frame arm plate and the angle-adjuster lower connection plate are rotatable relatively.

13. The restoration and energy absorption mechanism for a seat backrest according to claim 12, **characterized in that** the rated breaking point is a strip structure.

14. The restoration and energy absorption mechanism for a seat backrest according to claim 1 or 2, **characterized in that** the energy-absorbing fastening element is a stepped screw bolt.

15. A restoration and energy absorption mechanism for a seat backrest, comprising a seat-frame arm plate, and an angle-adjuster lower connection plate, to which a seat backrest is mounted through an angle adjuster, wherein an inclination of the seat backrest is adjustable by means of the angle adjuster, wherein a first site of the angle-adjuster lower connection plate is hinged to a first site of the seat-frame arm plate through a pin, **characterized in that** the restoration and energy absorption mechanism further comprises:
- a waist-shaped hole, in which an energy-absorbing structure is provided, and which is provided for one of the angle-adjuster lower connection plate and the seat-frame arm plate,
- an energy-absorbing fastening element, which is provided for the other of the angle-adjuster lower connection plate and the seat-frame arm plate, and which passes through a first site of the waist-shaped hole and is fastened to the other member, and
- a locking piece, which locks the angle-adjuster lower connection plate with the seat-frame arm plate in a locking state of the locking piece, wherein the angle-adjuster lower connection plate is unlocked from the seat-frame arm plate in an unlocking state of the locking piece, so that the seat-frame arm plate and the angle-adjuster lower connection plate are rotatable relatively, wherein during a movement of the energy-absorbing fastening element from the first site of the waist-shaped hole to a second site of the waist-shaped hole, the energy-absorbing fastening element cooperates with the energy-absorbing structure for energy absorption.

16. An automobile seat, **characterized in that** the automobile seat comprises the restoration and energy absorption mechanism for a seat backrest according to any one of claims 1 to 15.
